# FASCICULE DE BREVET EUROPEEN

(11) **EP 3 994 081 B1**
(45) Date de publication et mention de la délivrance du brevet: **11.02.2026**
(21) Numéro de dépôt: 20734980.4
(22) Date de dépôt: 02.07.2020
(51) Int. Cl.: B65G 47/14

(54) **DISPOSITIF DE FOURNITURE D'ELEMENTS DE BOUCHAGE TRIES**
VORRICHTUNG ZUR BEREITSTELLUNG SORTIERTER VERSCHLUSSELEMENTE
DEVICE FOR PROVIDING SORTED CLOSURE ELEMENTS

(30) Priorité: 04.07.2019 FR 1907453
(43) Date de publication de la demande: 11.05.2022
(73) Titulaire: SIDEL PARTICIPATIONS, 76930 Octeville-sur-Mer (FR)
(72) Inventeur: SPIESSER, Daniel, 67116 REICHSTETT (FR)
(74) Mandataire: Sidel Group
(86) Numéro de dépôt international: PCT/EP2020/068699
(87) Numéro de publication internationale: WO 2021/001490

(56) Documents cités:
- CN-A- 107 244 540
- US-A- 2 159 851
- US-A- 2 690 216
- US-A- 5 038 914
- US-A- 726 257
- US-A1- 2008 190 736
- US-B1- 6 321 904
- US-B1- 6 491 152

## Description

La présente invention entre dans le domaine de la fourniture d'éléments de bouchage triés, en vue d'alimenter un poste de travail aval au sein d'une ligne de production.

Préférentiellement, de tels éléments de bouchage consistent en des capsules destinées à refermer des récipients, notamment des flacons ou des bouteilles, en verre ou en métal, notamment en aluminium. Toutefois, l'invention trouvera une application pour des éléments de bouchage présentant globalement une forme cylindrique, conique ou tronconique. Lesdits éléments de bouchage peuvent être en tout type de matériau, notamment en plastique ou en métal.

Plus avant, un récipient comprend une ouverture, sous forme d'un buvant, généralement située en partie supérieure d'un goulot. Après remplissage, l'ouverture d'un récipient est obturée de façon hermétique par l'intermédiaire d'un élément de bouchage, comme une capsule. Une telle capsule présente globalement une forme tubulaire aplatie, s'apparentant à un disque creusé. Ladite capsule est fermée par un fond concave afin de recevoir intérieurement un joint assurant l'étanchéité une fois la capsule positionnée au contact du buvant. Une telle capsule présente un bord périphérique crénelé, provenant de sa fabrication par emboutissage d'une feuille métallique, notamment en fer banc épais. Ce bord crénelé comprend un évasement depuis le fond vers l'extérieur, conférant à une telle capsule la dénomination de « couronne » (ou « crown cap » en anglais).

De manière connue, la fourniture d'éléments de bouchage, sous forme de capsules, s'effectue par l'intermédiaire d'un module de triage, communément appelé « cap-feeder ». Un tel module de triage reçoit en entrée lesdites capsules déversées en vrac au sein d'un réservoir, comme une trémie. Ce module assure, d'une part, le tri de ces capsules afin de les disposer selon un positionnement adapté en vue, d'autre part, d'approvisionner de façon continue en capsules triées, un poste de travail situé en aval sur la ligne de production. Les rôles principaux d'un tel poste de travail aval sont de remplir les conteneurs et ensuite de les fermer au moyen des capsules triées. Par exemple, ledit poste de travail aval peut consister en un module d'embouteillage pourvu d'une unité de bouchage des conteneurs, ou bien une unité de stérilisation desdits éléments de bouchage.

En d'autres termes, un module de triage permet de prendre des capsules initialement pêle-mêle et d'orienter correctement toutes ces capsules, selon un flux régulier et continu alimentant au moins le poste de travail aval ayant pour fonction d'obturer chaque conteneur au moyen d'une capsule. Un tel module de triage est généralement appelé « cap-feeder ».

Un module de triage existant comprend en partie inférieure un réservoir recevant les éléments de bouchage en vrac et, plongeant au sein dudit réservoir, un moyen d'élévation généralement formé d'un tapis sans fin orienté verticalement et entraîné de manière à extraire et à assurer l'élévation desdites capsules. Plus précisément, ledit tapis comporte sur une face extérieure une succession de tasseaux juxtaposés sur sa longueur. Lesdits tasseaux se présentent sous la forme de barres plates, de forme parallélépipédique rectangle. De tels tasseaux sont espacés pour ménager des logements s'étendant transversalement, d'un bord à l'autre dudit tapis, l'espacement entre deux tasseaux correspondant approximativement aux diamètres desdites capsules à prélever au sein du réservoir. De plus, l'inclinaison du tapis, la configuration ainsi que les dimensions desdits tasseaux, assurent un positionnement déterminé des capsules prélevées.

En effet, une capsule qui se positionne au sein d'un logement selon une autre configuration que celle souhaitée, par exemple à l'envers ou en quinconce, se retrouve déséquilibrée, bascule de son logement et retombe naturellement sous l'effet de la gravité, au fur et à mesure du déplacement vertical dudit convoyeur. Ainsi, une fois arrivées en fin de course, seules restent au sein des logements les capsules ordonnées selon la configuration choisie. Cette technique de tri est communément dénommée « chute d'eau » ou « waterfall ».

Une problématique majeure réside dans le fait que ledit flux régulier envoyé en sortie des moyens d'élévation doit impérativement comporter des capsules correctement positionnées, tout particulièrement avec leur face ouverte orientée vers l'extérieur des logements, leur bord crénelé vers l'extérieur dudit logement.

Actuellement, une fois arrivées en haut du moyen d'élévation, les capsules ont subi un tri qui ne permet pas d'assurer avec certitude qu'aucune capsule ne présente un raté d'orientation.

Afin d'améliorer le tri des capsules lors de leur élévation, il a été imaginé de modifier la forme des logements destinés à recevoir lesdites capsules.

Une solution existante consiste en des tasseaux dont le chant supérieur est conformé spécifiquement pour recevoir le bord périphérique crénelé des capsules. En particulier, le chant supérieur présente une section concave, formant une rainure en creux sur toute la longueur de chacun desdits tasseaux. Plus précisément, cette rainure est asymétrique par rapport à l'épaisseur de chaque tasseau, avec un point le plus rentrant situé vers la face extérieure dudit tasseau, à savoir la face située à l'opposé du tapis sur lequel ledit tasseau repose. Dès lors, la rainure présente une pente plus fortement inclinée depuis l'avant jusqu'au point le plus rentrant, par rapport à l'inclinaison de la pente s'étendant depuis l'arrière. En outre, les inclinaisons de ces pentes correspondent au degré de l'évasement du bord périphérique crénelé.

Ainsi, une capsule étant prélevée depuis le bac dans un logement ménagé entre deux tasseaux, vient s'insérer inférieurement au sein de ladite rainure au niveau du bas de son bord périphérique crénelé. Une capsule correctement orientée, avec son évasement tourné vers l'extérieur, voit son bord périphérique coïncider avec les pentes de la rainure du tasseau inférieur du logement. De plus, l'insertion dans la rainure autorise la capsule à renter entièrement dans le logement, à savoir que le haut du bord périphérique vient s'insérer sous le chant inférieur du tasseau du haut.

Dans le cas contraire, la capsule se retrouve partiellement introduite voire totalement introduite dans la rainure et, de ce fait, dans le logement entre le bord inférieur du tasseau supérieur et ladite rainure du tasseau inférieur. Son centre de gravité est désaxé, ce qui induit plus fortement son déséquilibre et sa chute vers la trémie.

En outre, le déséquilibre peut être accentué par un moyen de tri coopérant avec le tapis du convoyeur d'élévation, de manière à faire tomber les capsules mal orientées présentes dans ledit logement. Un tel moyen de tri peut comprendre des moyens adaptés pour amplifier le déséquilibre des capsules, comme par exemple en générant des vibrations du tapis, en propulsant de l'air soufflé ou bien en modifiant l'inclinaison dudit tapis sur une distance, formant une bosse ou « dos d'âne » au niveau du brin ascendant dudit tapis.

Toutefois, une telle solution n'apporte pas encore entière satisfaction. En effet, on constate encore des capsules mal orientées qui sont envoyées vers le flux continu régulier. Il est alors nécessaire d'effectuer une détection à l'unité en aval, afin d'éjecter les capsules mal orientées.

Par ailleurs, au moment de l'envoi des capsules présentes au sein d'un logement, il est connu des moyens d'éjection. De tels moyens peuvent être de différents types, notamment pneumatique par envoi d'air pulsé ou sous pression, voire en utilisant simplement un effet gravitaire. Une autre solution peut consister en des moyens mécaniques, comme un organe qui est déplacé pour effectuer une poussée transversale le long dudit logement, depuis une extrémité vers l'extrémité opposée, poussant les capsules en un train jusqu'à une sortie prévue à cet effet. Dès lors, une capsule mal orientée peut venir s'emboîter avec des capsules adjacentes bien orientées et être éjectée avec les autres, alors qu'elle ne le devrait pas. En outre, une capsule mal orientée peut venir se bloquer contre les parois du logement. Le train de capsules brutalement bloqué est alors susceptible de détériorer l'organe et les tasseaux, mais aussi de plier les capsules comprimées à ce moment, voire de les propulser violemment.

US6491152B1 décrit un dispositif selon le préambule de la revendication 1.

L'invention a pour but de pallier les inconvénients de l'état de la technique en proposant d'améliorer le tri de capsules de type couronne, au travers d'une forme spécifique et déterminée du chant inférieur du tasseau supérieur des logements.

En particulier, l'invention prévoit un chant inférieur bombé, présentant une section convexe, de manière à déterminer un logement dont la forme en profondeur correspond parfaitement au profile des capsules, lorsqu'elles sont orientées correctement.

Pour ce faire, le dispositif de fourniture d'éléments de bouchage trié, notamment sous forme de capsules de type « couronne », comprend
- un volume de stockage en vrac desdites capsules ;
- un convoyeur d'élévation sous forme d'un tapis pourvu d'un brin ascendant pénétrant ledit volume de stockage ;
- ledit convoyeur d'élévation comprenant en face extérieure une pluralité de tasseaux orientés transversalement par rapport audit tapis et espacés de manière à déterminer un logement entre le chant supérieur d'un tasseau inférieur et le chant inférieur d'un tasseau supérieur, chaque logement prélevant plusieurs desdites capsules lors de son passage au sein dudit volume de stockage ;
- un moyen de tri par déséquilibre de capsules présentes au sein dudit logement, ledit moyen de tri coopérant avec le déplacement dudit convoyeur d'élévation, de manière à faire tomber les capsules mal orientées présentes dans ledit logement.

Un tel dispositif de fourniture se caractérise par le fait que le chant inférieur du tasseau supérieur présente une section convexe en opposition dudit tapis.

Selon des caractéristiques additionnelles, non limitatives, ladite section convexe peut présenter un angle par rapport à la face dudit tapis, ledit angle étant déterminé par rapport à l'inclinaison du bord desdites capsules.

Ladite section convexe peut être arrondie.

Ladite section convexe peut être arrondie selon un arc de cercle correspondant à l'évasement du bord périphérique desdites capsules.

Un logement peut comprendre une distance arrière située contre le tapis entre le chant supérieur du tasseau inférieur et le point le plus bas du chant inférieur de section convexe du tasseau supérieur, ladite distance arrière étant inférieure au diamètre extérieur du bord crénelé d'une capsule.

Le chant supérieur d'un tasseau inférieur comprend une section concave formant une rainure.

Ladite rainure peut présenter une section asymétrique et comprend une pente arrière située contre le tapis inclinée plus faiblement que la pente située en opposition vers l'extérieur du logement.

Un tasseau seul est également décrit, notamment destiné à pourvoir un dispositif de fourniture d'éléments de bouchage triés.

Un tel tasseau pour dispositif de fourniture d'éléments de bouchage triés, comprend une barre aplatie, caractérisé par le fait que le chant inférieur de ladite barre dudit tasseau présente une section convexe.

Selon des caractéristiques additionnelles, non limitatives, ladite section convexe peut être est arrondie.

Le chant supérieur de la barre dudit tasseau peut comprendre une section concave formant une rainure.

D'autres caractéristiques et avantages de l'invention ressortiront de la description détaillée qui va suivre des modes de réalisation non limitatifs de l'invention, en référence aux figures annexées, dans lesquelles :
La figure 1 représente schématiquement une vue en perspective d'un mode de réalisation d'un dispositif de fourniture d'éléments de bouchage triés ;
La figure 2 représente schématiquement une vue en perspective d'un détail d'un dispositif de fourniture, montrant partiellement un convoyeur d'élévation ;
La figure 3 représente schématiquement une vue en perspective d'une partie d'un tasseau selon un premier mode de réalisation ;
La figure 4 représente schématiquement une vue similaire à la figure 3, montrant un tasseau selon un autre mode de réalisation ;
La figure 5 représente schématiquement une vue en coupe d'un logement selon un mode de réalisation, montrant le positionnement en insertion d'une capsule correctement orientée ; et
La figure 6 représente schématiquement une vue en coupe d'un logement selon un mode de réalisation, montrant une capsule mal orientée et déséquilibrée.

La présente invention concerne la fourniture d'éléments de bouchage au sein d'une ligne industrielle de production et de traitement de produits formant des récipients. Lesdits éléments de bouchage sont chacun destinés à obturer l'ouverture d'un des produits, après son remplissage.

En effet, un récipient comprend une ouverture, sous forme d'un buvant, généralement située en partie supérieure d'un goulot. Après remplissage, l'ouverture d'un récipient est obturée de façon hermétique par l'intermédiaire d'un élément de bouchage, préférentiellement sous forme d'une capsule 1.

Une telle capsule 1 présente globalement une forme tubulaire aplatie, fermée par un fond concave afin de recevoir intérieurement un joint assurant l'étanchéité une fois la capsule 1 positionnée au contact du buvant. Une telle capsule 1 présente un bord périphérique crénelé, provenant de sa fabrication par emboutissage d'une feuille métallique, notamment en fer banc épais. Ce bord crénelé comprend un évasement depuis le fond vers l'extérieur, conférant à une telle capsule 1 la dénomination de « couronne » (ou « crown cap » en anglais).

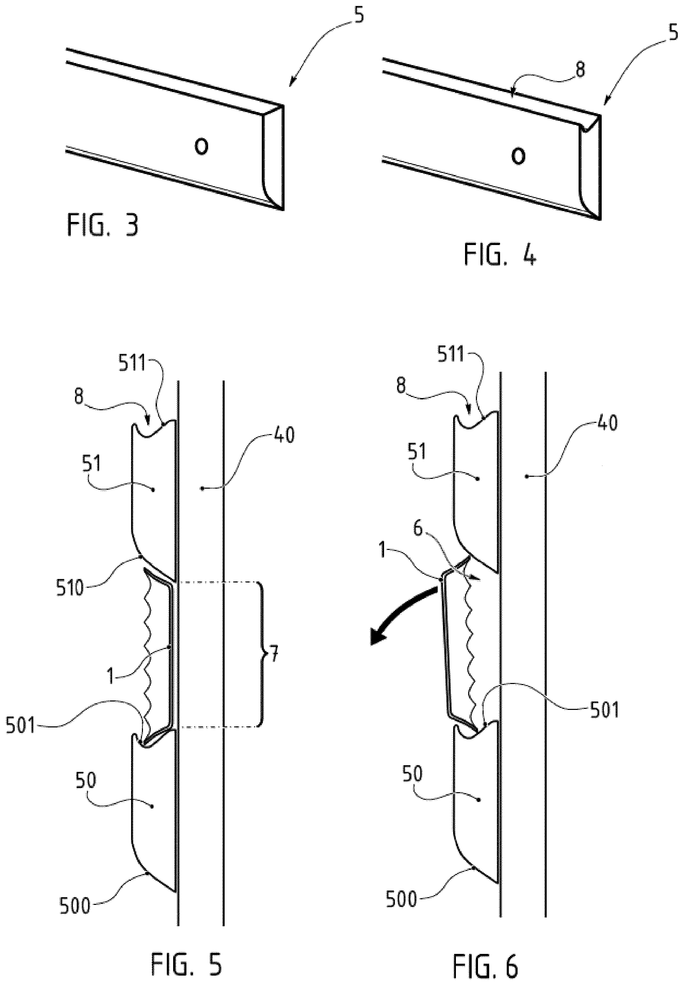

Un exemple d'une telle capsule 1 est visible en coupe sur les figures 5 et 6.

Dans ce contexte, la fourniture d'éléments de bouchage, sous forme de capsules 1, s'effectue par l'intermédiaire d'un module de triage, recevant en entrée lesdites capsules 1. Ce module assure, d'une part, le tri de ces capsules 1 afin de les disposer selon un positionnement adapté en vue, d'autre part, d'approvisionner de façon continue en capsules 1 triées, un poste de travail situé en aval sur la ligne de production, comme un poste de bouchage.

Dès lors, l'invention concerne l'invention concerne un dispositif 2 de fourniture d'éléments de bouchage tirés.

Le dispositif 2 de fourniture est alimenté en élément de bouchage, à savoir en capsules 1. Une telle alimentation peut s'effectuer depuis un poste situé en amont, comme un module de fabrication des éléments de bouchage, par exemple un poste d'emboutissage de capsules 1. Une telle alimentation peut alors être réalisée de façon automatique.

L'alimentation peut aussi être effectuée par déversement des capsules 1, préalablement fabriquées et conditionnées, par exemple au sein de cartons. Ces cartons sont vidés par un opérateur au sein du dispositif 2, de sorte que les capsules 1 puissent être prélevées et triés.

Pour ce faire, le dispositif 2 de fourniture comprend un volume 3 de stockage en vrac desdites capsules 1. Préférentiellement, ce volume 3 de stockage peut présenter la forme d'une trémie ou d'un bac, solidaire du dispositif 2 de fourniture, en particulier faisant partie intégrante ou rapportée de façon solidaire à sa structure.

Les capsules 1 alimentent le volume 3 de stockage et y restent de façon transitoire, avant d'être prélevées et tirées.

A ce titre, le dispositif 2 de fourniture comprend un convoyeur 4 d'élévation sous forme d'un tapis 40 pourvu d'un brin ascendant pénétrant ledit volume 3 de stockage. Le convoyeur 4 est préférentiellement de type à bande sans fin, ledit tapis 40 s'enroulant autour de rouleaux de renvois, libres et motorisés.

En outre, ledit tapis 40 du convoyeur 4 s'étend verticalement ou sensiblement verticalement. La motorisation entraîne donc le brin ascendant depuis le bas vers le haut, transportant les capsules 1 depuis ledit volume 3 de stockage.

Pour ce faire, ledit convoyeur 4 d'élévation comprend en face extérieure une pluralité de tasseaux 5. Ces tasseaux 5 sont fixés sur ledit tapis 40.

Lesdits tasseaux 5 sont orientés transversalement par rapport audit tapis 40. En d'autres termes, lesdits tasseaux 5 sont positionnés sur la largeur du convoyeur 4, s'étendant depuis un bord à l'autre du tapis 40. Les tasseaux 5 s'étendent donc horizontalement ou sensiblement horizontalement. Les tasseaux 5 sont parallèles entre eux. Dès lors, les tasseaux 5 sont orthogonaux par rapport au sens de déplacement du convoyeur 4. De surcroît, les tasseaux 5 sont espacés de manière à déterminer un logement 6. Le logement 6 est donc formé entre le chant supérieur 501 d'un tasseau inférieur 50 et le chant inférieur 510 d'un tasseau supérieur 51. En somme, deux tasseaux 50,51 adjacents constituent un logement 6 entre leurs bords se faisant face.

Les tasseaux 5,50,51 sont espacés notamment à intervalle régulier.

En outre, chaque tasseau 5,50,51 peut se présenter sous forme d'une barre aplatie, de forme globalement parallélépipédique rectangle.

Chaque logement 6 prélève plusieurs desdites capsules 1 lors de son passage au sein dudit volume 3 de stockage. Dès lors, l'intervalle entre les tasseaux 5,50,51 est déterminé afin que les dimensions d'un logement 6 correspondent aux dimensions des éléments de bouchage, notamment leur diamètre externe, de sorte que lesdits éléments de bouchage pénètrent au moins partiellement à l'intérieur d'un logement 6 lors de son passage au sein dudit volume 3 de stockage.

On notera qu'au cours de ce prélèvement, les éléments de bouchage peuvent s'introduire dans un logement 6 selon n'importe quelle orientation, à savoir avec leur dessus tourné vers le tapis 40 ou bien tourné en opposition dudit tapis 40 vers l'extérieur. Un exemple d'une capsule 1 avec son dessus tourné vers le tapis 40 est visible sur la figure 5, tandis qu'une capsule 1 orientée en sens inverse est visible sur la figure 6.

Comme en sortie du dispositif 2 de fourniture, les éléments de bouchage doivent tous être orientés de la même façon, préférentiellement avec leur dessus tourné vers le tapis 40, il convient d'effectuer un triage des éléments de bouchage tournés dans l'autre sens. Pour ce faire, le dispositif 2 de fourniture prévoit d'effectuer un premier tri lors de l'ascension des éléments de bouchage, en générant un déséquilibre des éléments de bouchage, de sorte que, s'ils sont mal orientés, voire mal positionnés ou introduits dans les logements 6, ces éléments retombent sous l'effet de la gravité. De préférence, les éléments de bouchage déséquilibrés retombent vers le volume 3 de stockage où ils pourront être prélevés de nouveau. Dès lors, un tel dispositif 2 de fourniture est communément appelé type « waterfall ».

Dès lors, le dispositif 2 de fourniture comprend un moyen 9 de tri par déséquilibre de capsules 1 présentes au sein dudit logement 6. Ce moyen 9 de tri coopère avec le déplacement dudit convoyeur d'élévation 4, de manière à faire tomber les capsules 1 mal orientées présentes dans ledit logement 6.

Un tel moyen 9 de tri peut comprendre des moyens adaptés pour amplifier le déséquilibre des capsules 1, comme par exemple en générant des vibrations du tapis 40, en propulsant de l'air soufflé ou bien en modifiant l'inclinaison dudit tapis 40 sur une distance, formant une bosse ou « dos d'âne » au niveau du brin ascendant dudit tapis 40.

Afin d'améliorer le tri des éléments de bouchage lors de leur élévation par le convoyeur 4, le dispositif 2 de fourniture prévoit des tasseaux 5,50,51 conformés spécifiquement. Avantageusement, au moins le chant inférieur 510 du tasseau supérieur 51 présente une section convexe en opposition dudit tapis 40. En d'autres termes, ledit chant inférieur 510, préférentiellement de chaque tasseau 5,50,51, comprend une section inclinée selon une pente croissante depuis le tapis 40 vers ledit tasseau 5,50,51. En somme, le chant inférieur 510 forme un biseau ou chanfrein.

Préférentiellement, le tasseau supérieur 51 peut présenter une hauteur arrière située contre le tapis 40, supérieure à sa hauteur située en opposition vers l'extérieur du logement 6. En somme, sa face arrière est plus haute que sa face avant.

Un tel biseau peut être droit ou rectiligne. Préférentiellement, ladite section convexe est arrondie, à savoir présentant un arc de cercle. Dès lors, la section est bombée vers l'extérieur.

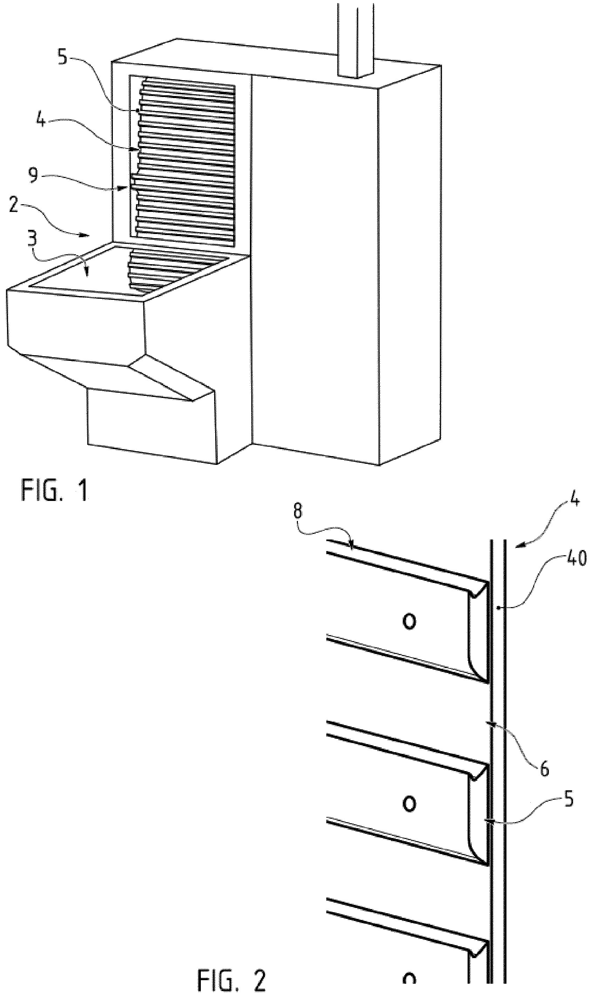

Préférentiellement, le chant inférieur 500,510 peut présenter un section convexe arrondie, à savoir notamment présentant une portion arrondie et une portion droite. Ladite section arrondie peut être située vers l'extérieur, à savoir de façon distale par rapport audit tapis 40. Un exemple d'une telle section convexe avec une portion arrondie et une portion rectiligne est visible sur les figures 2 à 6.

En outre, une telle configuration arrondie facilite l'introduction dans un logement 6 des éléments de bouchage, en particulier de capsules 1, lors de leur prélèvement. En somme, l'arrondi permet un meilleur emboîtement des capsules 1 bien orientées et limite la possibilité de capsules mal orientée de s'introduire et de rester dans le logement 6. Ces aspects sont notamment visibles sur les figures 5 et 6.

Par ailleurs, ladite section convexe peut être arrondie selon un arc de cercle correspondant à l'évasement du bord périphérique desdites capsules 1. En somme, on usine au moins le chant inférieur 500,510 lors de la fabrication des tasseaux 5,50,51, selon des dimensions et/ou des formes qui correspondent à celles des éléments de bouchage à prélever.

De la même façon, ladite section convexe peut présenter un angle par rapport à la face dudit tapis 40, ledit angle étant déterminé par rapport à l'inclinaison du bord desdites capsules 1. Cet angle s'entend de façon globale, préférentiellement selon la section rectiligne de ladite portion convexe. Un tel angle peut être compris entre 5° et 85° par rapport à un plan orthogonal à la surface du tapis 40, à savoir par rapport à la normale dudit tapis 40. Préférentiellement, dans le cas d'une capsule 1, l'angle est de 35° par rapport à ladite normale au tapis 40. La figure 5 montre tout particulièrement l'angle d'inclinaison de la partie convexe, améliorant l'introduction d'une capsule 1.

En outre, un logement 6 peut comprendre une distance 7 arrière située contre le tapis 40 entre le chant supérieur 501 du tasseau inférieur 50 et le point le plus bas du chant inférieur 510 de la section convexe du tasseau supérieur 51, telle que ladite distance 7 arrière est inférieure au diamètre extérieur du bord crénelé d'une capsule 1. Une telle distance est visible notamment sur la figure 5. Dès lors, une capsule 1 peut venir parfaitement s'introduire dans le logement 6 jusqu'à venir contre la surface du tapis 40. A ce titre, le diamètre d'une capsule 1 standard peut être compris entre 10 et 50 mm (millimètres), préférentiellement de 26 mm, 29 mm ou 32 mm pour une capsule 1 de type couronne.

En somme, dans le cas globale d'un élément de bouchage, la forme des parois hautes et basses du logement 6 peut être prévue complémentaire par rapport à la forme d'un élément de bouchage, préférentiellement à la forme spécifique d'une capsule 1.

On notera que le bord supérieure 501,511 d'un tasseau 5,50,51, peut être droit, comme notamment visible sur le mode de réalisation de la figure 3.

Afin d'améliorer le maintien dans un logement 6 d'une capsule 1 bien orientées, le chant supérieur 501 d'un tasseau inférieur 50 comprend une section concave formant une rainure 8.

Une telle rainure 8 peut être formée par un biseau ou un chanfrein, formant une pente vers la surface du tapis 40. Ainsi ladite rainure 8 est formée par cette pente et le tapis 40. Préférentiellement, ladite rainure 8 présente une section asymétrique et comprend une pente arrière située contre le tapis 40 inclinée plus faiblement que la pente située en opposition vers l'extérieur du logement 6. Cette configuration asymétrique de la rainure 8 est particulièrement visible sur les figures 4 à 6.

Ainsi, en sortie du dispositif 2 de fourniture, l'invention assure que tous les éléments de bouchage sont correctement orientés.

A ce titre, de façon subsidiaire, une fois les éléments de bouchage prélevés et transportés de façon ascendante par le convoyeur 4, effectuant un tri au cours de leur élévation, les éléments triés restant dans chaque logement 6 sont envoyés vers l'aval, notamment en vue de référencer le flux d'éléments selon une cadence déterminée. Cet envoi s'effectue notamment par l'intermédiaire de moyens d'éjection adaptés, assurant l'extraction linéaire des éléments présents dans chaque logement 6, en trains successifs. De tels moyens d'éjection peuvent comprendre un organe mécanique de poussée, un propulseur par air, notamment air comprimé, ou bien encore configuré pour éjection les éléments sous l'effet de la gravité.

Dès lors, le dispositif 2 de fourniture comprend au moins un de ces tasseaux 5.

Préférentiellement, un de ces tasseaux 5 comprend une barre aplatie avec son chant inférieur 500,510 présentant une section convexe.

En outre, ladite section convexe peut être arrondie.

De surcroît, le chant supérieur 501,511 de la barre peut comprendre une section concave formant une rainure 8.

## Revendications

1. Dispositif (2) de fourniture d'éléments de bouchage triés sous forme de capsules (1) de type « couronne », comprenant :
- un volume (3) de stockage en vrac desdites capsules (1) ;
- un convoyeur (4) d'élévation sous forme d'un tapis (40) pourvu d'un brin ascendant pénétrant ledit volume (3) de stockage ;
- ledit convoyeur (4) d'élévation comprenant en face extérieure une pluralité de tasseaux (5) orientés transversalement par rapport audit tapis (40) et espacés de manière à déterminer un logement (6) entre le chant supérieur (501) d'un tasseau inférieur (500) et le chant inférieur (510) d'un tasseau supérieur (51), chaque logement (6) prélevant plusieurs desdites capsules (1) lors de son passage au sein dudit volume (3) de stockage ;
- un moyen (9) de tri par déséquilibre de capsules (1) présentes au sein dudit logement (6), ledit moyen (9) de tri coopérant avec le déplacement dudit convoyeur (4) d'élévation, de manière à faire tomber les capsules (1) mal orientées présentes dans ledit logement (6),
- le chant supérieur (501) d'un tasseau inférieur (50) comprend une section concave formant une rainure (8),
**caractérisé par le fait qu'**au moins
- le chant inférieur (510) du tasseau supérieur (51) présente une section convexe en opposition dudit tapis (40).

2. Dispositif (2) de fourniture selon la revendication 1, **caractérisé par le fait que** ladite section convexe présente un angle par rapport à la face dudit tapis (40), ledit angle étant déterminé par rapport à l'inclinaison du bord desdites capsules (1).

3. Dispositif (2) de fourniture selon la revendication 1, **caractérisé par le fait que** ladite section convexe est arrondie.

4. Dispositif (2) de fourniture selon la revendication 2, **caractérisé par le fait que** ladite section convexe est arrondie selon un arc de cercle correspondant à l'évasement du bord périphérique desdites capsules (1).

5. Dispositif (2) de fourniture selon l'une quelconque des revendications précédentes, **caractérisé par le fait qu'**un logement (6) comprend une distance (7) arrière située contre le tapis (40) entre le chant supérieur (501) du tasseau inférieur (50) et le point le plus bas du chant inférieur (510) de section convexe du tasseau supérieur (51), ladite distance (7) arrière étant inférieure au diamètre extérieur du bord crénelé d'une capsule (1).

6. Dispositif (2) de fourniture selon l'une quelconque des revendications précédentes, **caractérisé par le fait que** ladite rainure (8) présente une section asymétrique et comprend une pente arrière située contre le tapis (40) inclinée plus faiblement que la pente située en opposition vers l'extérieur du logement (6).

## Patentansprüche

1. Vorrichtung (2) zur Bereitstellung von sortierten Verschlusselementen in Form von Kapseln (1) vom Typ "Kronkorken", umfassend:
- ein Lagervolumen (3) zur losen Lagerung der Kapseln (1) ;
- einen Aufwärtsförderer (4) in Form eines Bandes (40), das mit einem Aufwärtstrum versehen ist, das in das Lagervolumen (3) eindringt;
- wobei der Aufwärtsförderer (4) an der Außenseite eine Vielzahl von Leisten (5) umfasst, die quer zu dem Band (40) ausgerichtet sind und so beabstandet sind, dass eine Aufnahme (6) zwischen der oberen Kante (501) einer unteren Leiste (500) und der unteren Kante (510) einer oberen Leiste (51) bestimmt wird, wobei jede Aufnahme (6) mehrere der Kapseln (1) bei ihrem Durchgang durch das Lagervolumen (3) aufnimmt;
- eine Sortiereinrichtung (9) zum Sortieren von in der Aufnahme (6) vorhandenen Kapseln (1) durch Unwucht, wobei die Sortiereinrichtung (9) mit der Verlagerung des Aufwärtsförderers (4) so zusammenwirkt, dass sie die in der Aufnahme (6) vorhandenen falsch ausgerichteten Kapseln (1) fallen lässt;
- wobei die obere Kante (501) einer unteren Leiste (50) einen konkaven Querschnitt aufweist, der eine Rille (8) bildet, **dadurch gekennzeichnet, dass** mindestens
- die untere Kante (510) der oberen Leiste (51) entgegengesetzt zum Band (40) einen konvexen Querschnitt aufweist.

2. Vorrichtung (2) zur Bereitstellung nach Anspruch 1, **dadurch gekennzeichnet, dass** der konvexe Querschnitt einen Winkel in Bezug auf die Seite des Bandes (40) aufweist, wobei der Winkel in Bezug auf die Neigung des Randes der Kapseln (1) bestimmt wird.

3. Vorrichtung (2) zur Bereitstellung nach Anspruch 1, **dadurch gekennzeichnet, dass** der konvexe Querschnitt gerundet ist.

4. Vorrichtung (2) zur Bereitstellung nach Anspruch 2, **dadurch gekennzeichnet, dass** der konvexe Querschnitt gemäß einem Kreisbogen gerundet ist, welcher der Aufweitung des Umfangsrandes der Kapseln (1) entspricht.

5. Vorrichtung (2) zur Bereitstellung nach einem der vorhergehenden Ansprüche, **dadurch gekennzeichnet, dass** eine Aufnahme (6) einen an dem Band (40) gelegenen hinteren Abstand (7) zwischen der oberen Kante (501) der unteren Leiste (50) und dem tiefsten Punkt der unteren Leiste (510) eines konvexen Querschnitts der oberen Leiste (51) umfasst, wobei der hintere Abstand (7) kleiner als der Außendurchmesser des gezackten Rands einer Kapsel (1) ist.

6. Vorrichtung (2) zur Bereitstellung nach einem der vorhergehenden Ansprüche, **dadurch gekennzeichnet, dass** die Rille (8) einen asymmetrischen Querschnitt aufweist und eine an dem Band (40) gelegene hintere Steigung aufweist, die schwächer als die zur Außenseite der Aufnahme (6) hin gelegene entgegengesetzte Steigung geneigt ist.

## Claims

1. Device (2) for providing sorted capping elements in the form of caps (1) of "crown" type, comprising:
- a volume (3) for storage in loose form of said caps (1) ;
- a lifting conveyor (4) in the form of a belt (40) provided with an ascending strand that enters said storage volume (3);
- said lifting conveyor (4) comprising, on its outer face, a plurality of cleats (5) that are oriented transversely with respect to said belt (40) and spaced apart so as to determine a housing (6) between the upper edge face (501) of a lower cleat (500) and the lower edge face (510) of an upper cleat (51), each housing (6) picking up a plurality of said caps (1) as it passes through said storage volume (3);
- a means (9) for sorting by unbalancing caps (1) that are present within said housing (6),
said sorting means (9) cooperating with the movement of said lifting conveyor (4), so as to cause the poorly oriented caps (1) that are present in said housing (6) to drop,
- the upper edge face (501) of a lower cleat (50) comprises a concave section that forms a groove (8), **characterized by** the fact that at least
- the lower edge face (510) of the upper cleat (51) has a convex section in opposition to said belt (40).

2. Provision device (2) according to Claim 1, **characterized by** the fact that said convex section has an angle with respect to the face of said belt (40), said angle being determined with respect to the inclination of the edge of said caps (1).

3. Provision device (2) according to Claim 1, **characterized by** the fact that said convex section is rounded.

4. Provision device (2) according to Claim 2, **characterized by** the fact that said convex section is rounded in an arc of a circle corresponding to the flare of the peripheral edge of said caps (1).

5. Provision device (2) according to any one of the preceding claims, **characterized by** the fact that a housing (6) comprises a rear distance (7) situated against the belt (40) between the upper edge face (501) of the lower cleat (50) and the lowest point of the lower edge face (510) of convex section of the upper cleat (51), said rear distance (7) being smaller than the outside diameter of the crenellated edge of a cap (1).

6. Provision device (2) according to any one of the preceding claims, **characterized by** the fact that said groove (8) has an asymmetric section and comprises a rear slope situated against the belt (40) that is inclined less than the slope that is situated in opposition toward the outside of the housing (6).
